# FASCICULE DE BREVET EUROPEEN

(11) **EP 2 853 834 B1**
(45) Date de publication et mention de la délivrance du brevet: **22.02.2017**
(21) Numéro de dépôt: 14177751.6
(22) Date de dépôt: 21.07.2014
(51) Int. Cl.: F16K 15/03, G05D 7/01, F24F 13/14, F24F 11/047, F24F 13/10

(54) **Dispositif de régulation du débit d'air dans une canalisation**
Vorrichtung zum Regulieren des Luftdurchsatzes in einer Kanalisation
Device for controlling the flow of air in a pipeline

(30) Priorité: 23.07.2013 FR 1357224
(43) Date de publication de la demande: 01.04.2015
(73) Titulaire: Anjos Ventilation, 01230 Torcieu (FR)
(72) Inventeur: Barbarin, Laurent, 01500 Amberieu en Bugey (FR); Barbarin, Christian, 01500 Amberieu en Bugey (FR)
(74) Mandataire: Lavoix

(56) Documents cités:
- DE-C1- 4 411 260
- FR-A1- 2 736 709
- FR-B1- 2 728 660
- GB-A- 1 206 290
- US-A- 5 741 180

## Description

La présente invention concerne un dispositif de régulation du débit d'air dans une canalisation.

Dans le domaine des dispositifs de régulation du débit d'air dans une canalisation, il est connu, notamment de FR-B-2 728 660, d'utiliser un élément de calibrage pour régler la valeur à laquelle le débit d'air passant dans le dispositif est maintenu sensiblement constant. Un volet mobile permettant de réguler le débit de façon dynamique est monté avec possibilité de pivotement sur l'élément de calibrage. Le déplacement du volet fait varier l'aire d'une section de passage d'air, délimitée par le volet par rapport à une surface interne du conduit. L'élément de calibrage est placé dans une position plus ou moins avancée dans un conduit d'air du dispositif afin de régler le débit d'air, en déplaçant l'élément de calibrage en translation transversalement à l'axe longitudinal du conduit. Pour assurer l'étanchéité de la partie du conduit opposée à la section de passage d'air, l'élément de calibrage comprend une face avant qui masque le conduit. Lorsque l'élément de calibrage est dans sa position qui autorise un débit maximal, cette face avant a tendance à dépasser de la circonférence du dispositif, de sorte que son implantation dans une canalisation est délicate.

C'est à ces inconvénients qu'entend remédier l'invention en proposant un nouveau dispositif de régulation du débit d'air dans une canalisation, dont la structure permet d'éviter que des parties de l'élément de calibrage ne dépassent de la circonférence du conduit.

A cet effet, l'invention concerne un dispositif de régulation du débit d'air dans une canalisation, comprenant un conduit adapté pour s'encastrer dans la canalisation, un volet mobile en fonction du débit d'air entrant dans le conduit, le volet délimitant, par rapport à une surface interne du conduit, une section de passage d'air, et un élément de calibrage réglable monté mobile en translation selon un axe transversal perpendiculaire à un axe de rotation du volet, entre une première position, dans laquelle le débit d'air pouvant passer dans le dispositif est maximal, et une seconde position, dans laquelle le débit d'air pouvant passer dans le dispositif est minimal. Ce dispositif est caractérisé en ce qu'il comprend une paroi d'étanchéité, s'étendant entre l'élément de calibrage et une surface interne du conduit, adaptée pour empêcher le passage d'air du côté du conduit opposé à la section de passage de l'air, cette paroi d'étanchéité étant mobile en rotation par rapport au conduit sous l'action du déplacement de l'élément de calibrage, et en ce que l'élément de calibrage comprend une paroi avant perpendiculaire à l'axe longitudinal du conduit qui, dans la première position de l'élément de calibrage, ne dépasse pas de la circonférence d'une face avant du conduit.

Grâce à l'invention, l'étanchéité de la partie du conduit opposée par rapport à la section de passage d'air est réalisée par une paroi qui ne dépasse pas de la circonférence du dispositif et rend possible l'installation du dispositif de régulation dans une canalisation éloignée de l'ouverture d'un mur.

Selon des aspects avantageux mais non obligatoires de l'invention, un tel dispositif peut incorporer une ou plusieurs des caractéristiques suivantes, prises dans toute combinaison techniquement admissible :
- La paroi d'étanchéité est mobile en rotation par rapport au conduit autour d'un axe de rotation parallèle à l'axe de rotation du volet.
- La paroi d'étanchéité est reliée à l'élément de calibrage par au moins un pion ménagé sur l'élément de calibrage et inséré dans une cavité de la paroi d'étanchéité.
- Dans la première position de l'élément de calibrage, la paroi d'étanchéité repose contre une paroi plane du dispositif de régulation dans une position parallèle à l'axe longitudinal du conduit et la paroi plane comprend au moins un évidement de réception du pion de l'élément de calibrage et d'une partie de la paroi d'étanchéité définissant la cavité.
- L'élément de calibrage comprend deux pions parallèles insérés dans deux cavités parallèles de la paroi d'étanchéité.
- Le volet comprend, sur une extrémité d'une surface plane du volet, deux surfaces qui tronquent l'extrémité de la face plane du volet et dont la forme correspond à la forme d'une surface interne du conduit.
- Les surfaces qui tronquent l'extrémité du volet sont en tronçon de cylindre à section circulaire.
- Le rayon de courbure des surfaces en tronçon de cylindre est égal au rayon de courbure d'une surface interne en tronçon de cylindre du conduit.
- Le volet comprend deux parois latérales planes parallèles entre elles et perpendiculaires à l'axe de rotation du volet, et une surface arrière s'étendant à partir de l'extrémité de la surface plane à l'opposé d'un bord avant du volet par rapport à l'axe de rotation du volet, alors que les surfaces en tronçon de cylindre sont ménagées aux intersections entre la surface plane, la surface arrière et les parois latérales.
- Dans la seconde position de l'élément de calibrage, la course du volet s'étend jusqu'à une position limite dans laquelle l'aire de la section de passage d'air est minimale, et dans laquelle la surface en tronçon de cylindre du volet peut venir en contact surfacique avec la surface interne en tronçon de cylindre du conduit.

D'autres avantages de l'invention apparaîtront plus clairement à la lumière de la description qui va suivre d'un dispositif de régulation du débit d'air conforme à son principe, faite à titre d'exemple non limitatif en référence aux dessins annexés dans lesquels :
- les figures 1, 2 et 3 sont des vues en perspective d'un dispositif de régulation du débit d'air conforme à l'invention dans une première, une deuxième et une troisième configurations;
- la figure 4 est une vue en coupe selon le plan IV du dispositif dans la configuration de la figure 2;
- la figure 5 est une vue en perspective éclatée, selon un autre angle, d'une partie du dispositif des figures 1 à 4 ;
- la figure 6 est une vue en perspective éclatée de l'ensemble du dispositif des figures 1 à 4 ;
- la figure 7 est une vue en perspective éclatée, selon un autre angle, de la partie du dispositif visible à la figure 5.

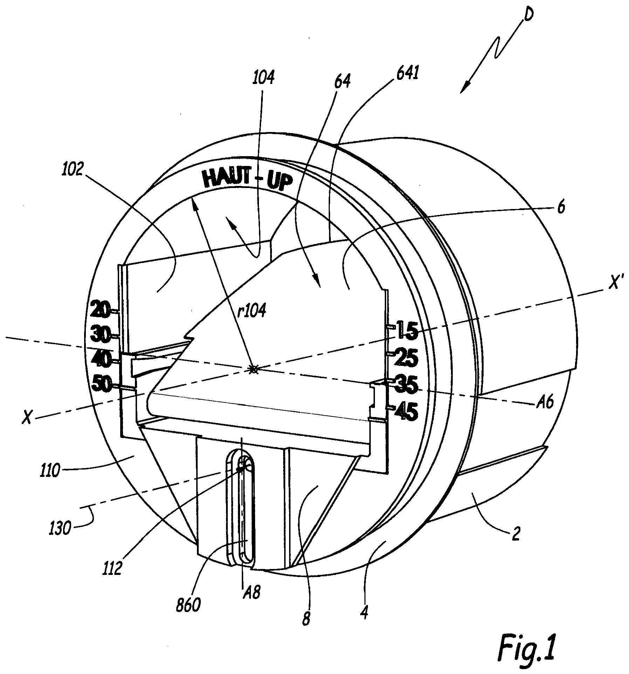

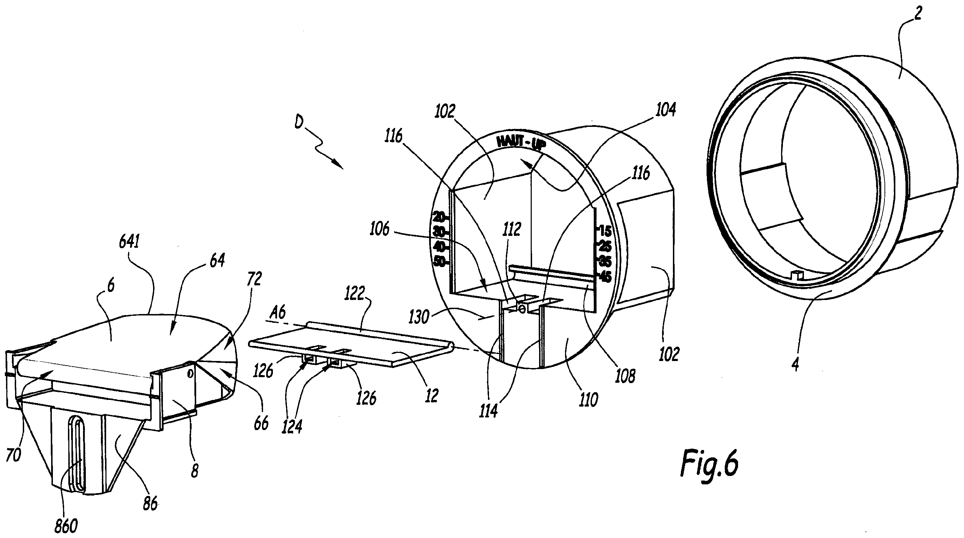

Sur les figures 1 à 7 est représenté un dispositif de régulation D du débit d'air dans une canalisation non représentée. Le dispositif D peut notamment être installé dans une conduite d'air dans une configuration de régulateur de débit, ou être installé à la sortie d'une conduite d'air contre un mur dans une configuration de bouche de ventilation.

Le dispositif D comprend un manchon cylindrique à section circulaire 2 adapté pour s'encastrer dans la canalisation. Le manchon 2 comprend, sur une surface externe, un joint 4 adapté pour assurer l'étanchéité entre le manchon 2 et les parois de la canalisation. Le dispositif D comprend également un conduit interne 10 monté dans le manchon 2. Le manchon 2 et le conduit interne 10 définissent ensemble un axe longitudinal X-X'.

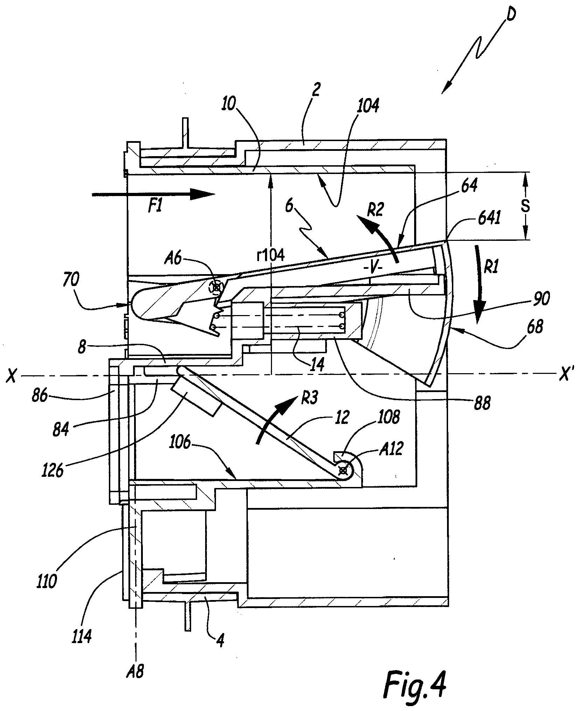

Le dispositif D comprend également un volet 6 mobile en fonction du débit d'air entrant dans le conduit interne 10 selon la flèche F1 à la figure 4. La position du volet 6 est contrôlée de façon dynamique par le débit d'air circulant dans le conduit interne 10. Plus le débit d'air entrant est important, plus le volet 6 obture le conduit interne 10 pour réduire le débit d'air passant dans le dispositif D de manière qu'il soit sensiblement constant.

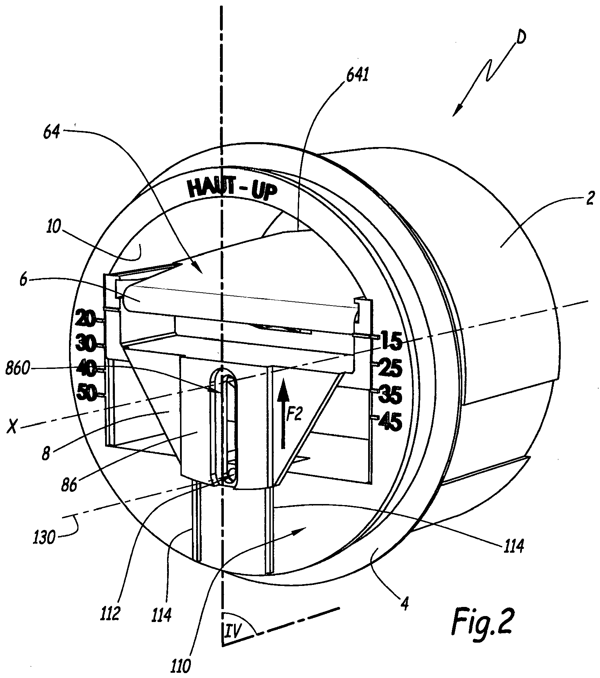

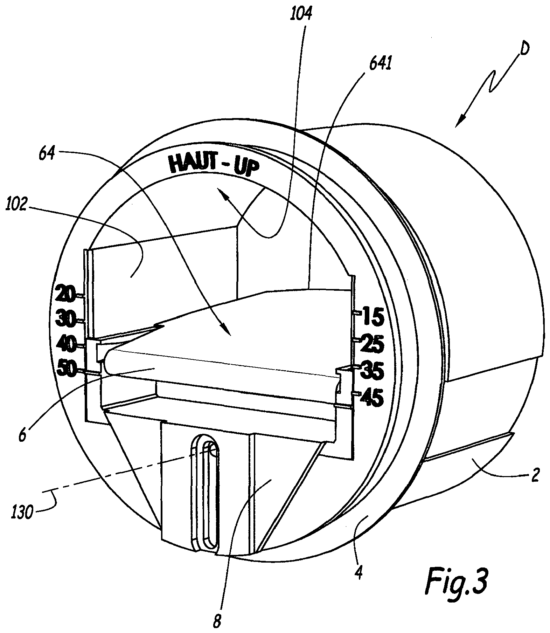

Le volet 6 est monté, avec possibilité de pivotement autour d'un axe de rotation A6 perpendiculaire à l'axe X-X', dans un élément de calibrage 8 réglable, lui-même monté dans le conduit interne 10. L'élément de calibrage 8 permet de régler la valeur à laquelle le débit d'air passant dans le dispositif D est maintenu sensiblement constant. L'élément de calibrage 8 est monté mobile en translation, par rapport au conduit interne 10, selon un axe A8 perpendiculaire à l'axe de rotation A6 et à l'axe longitudinal X-X'. L'élément de calibrage 8 est monté dans le conduit interne 10 avec possibilité de translation selon l'axe A8. Le conduit interne 10 comprend deux parois latérales planes 102 entre lesquelles l'élément de calibrage 8 est apte à se déplacer. L'élément de calibrage 8 est mobile entre une première position basse, représentée aux figures 1 et 3, dans lequel le débit d'air passant dans le conduit interne 10 peut être maximal, et une seconde position haute, représentée aux figures 2 et 4, dans laquelle le débit d'air passant dans le conduit interne 10 est minimal. Entre ces deux positions, l'élément de calibrage 8 peut être placé dans des positions intermédiaires.

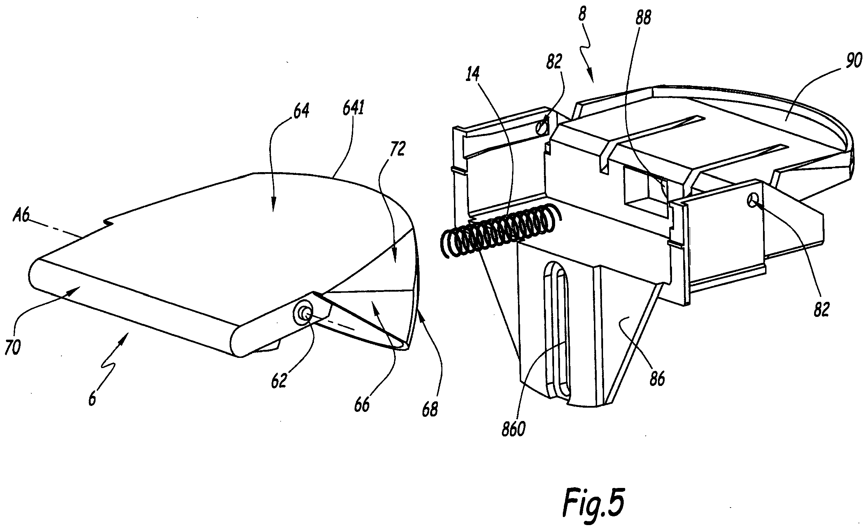

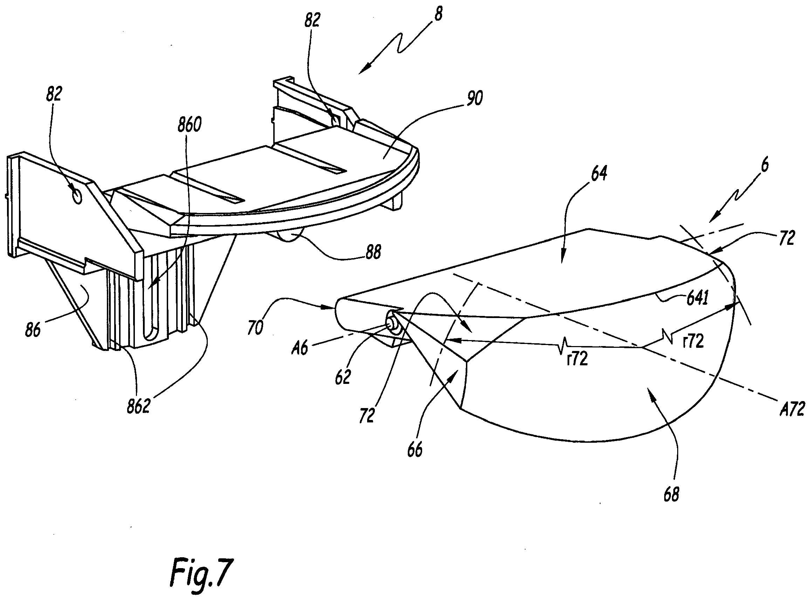

Le volet 6 comprend deux pions, dont un seul est visible aux figures 5 et 7 avec la référence 62, qui s'étendent de part et d'autre du volet 6 selon l'axe A6. Les pions 62 sont insérés dans des trous 82 de l'élément de calibrage 8 de manière à assurer la rotation du volet 6 par rapport à l'élément de calibrage 8, autour de l'axe A6.

Le volet 6 comprend une face plane 64 terminée par une extrémité 641 qui définit, par rapport à une surface interne supérieure 104 en tronçon de cylindre, du conduit interne 10, située entre les parois 102, une section S de passage d'air dans le dispositif de régulation D. Le volet 6 est mobile entre une première position représentée aux figures 2 et 3, dans laquelle la section S de passage d'air a une aire maximale, et une seconde position représentée à la figure 1, dans laquelle la section S de passage d'air a une aire minimale. La différence entre ces deux positions correspond à la course angulaire du volet 6. Lorsque l'élément de calibrage 8 est dans la position des figures 1 et 3, la course du volet 6 est maximale, car aucun élément du conduit interne 10 n'empêche le déplacement du volet 6 vers sa seconde position. Dans la configuration de la figure 2, lorsque l'élément de calibrage 8 est dans sa seconde position, l'extrémité 641 entre en contact avec la surface supérieure 104 du conduit interne 10, ce qui empêche le déplacement du volet 6 jusqu'à sa seconde position et réduit la course du volet 6.

Le volet 6 est rappelé par un ressort de rappel élastique 14 vers sa position des figures 2 et 3. Le ressort 14, représenté uniquement aux figures 4 et 5, est un ressort spiral de compression monté dans un logement cylindrique 88 ménagé dans l'élément de calibrage 8. Le ressort 14 exerce sur le volet 6 un effort qui tend à faire pivoter le volet 6 dans le sens de la flèche R1 à la figure 4.

Le volet 6 comporte deux parois latérales 66 planes, parallèles entre elles et perpendiculaires à l'axe de rotation A6. Le volet 6 comprend également une paroi arrière 68 qui s'étend à partir de l'extrémité 641, opposée à un bord avant 70 du volet 6 par rapport à l'axe A6. La paroi arrière 68, les parois latérales 66 et la paroi définie par la surface plane 64 forment, avec une plaque 90 de l'élément de calibrage 8, une chambre C sensiblement étanche. L'air entrant dans la chambre C provoque une augmentation de pression dans cette chambre qui a pour effet de manoeuvrer le volet 6 en rotation autour de l'axe A6, dans le sens de la flèche R2 à la figure 4, à l'encontre de l'effort du ressort 14, pour fermer la section de passage S, selon une technique connue de FR-B-2 736 709.

Aux intersections entre la surface plane 64 et la paroi arrière 68 avec les parois latérales 66, le volet 6 comprend deux surfaces 72qui tronquent l'extrémité 641 de part et d'autre du plan IV, qui est perpendiculaire à l'axe A6. Les surfaces 72 coupent l'intersection entre la surface plane 64, la surface arrière 68 et les surfaces latérales 66, de manière que la course du volet 6 ne soit pas bloquée par la surface 104. Les surfaces 72 présentent une forme correspondant sensiblement à la forme de la surface interne 104. Par rapport au cas où le volet 6 ne comprend pas de surfaces 72 qui tronquent l'extrémité 641, les surfaces 72 autorisent une course supplémentaire du volet 6.

De façon optionnelle, les surfaces 72 sont en tronçon de cylindre à section circulaire et définissent un tronçon de cylindre dont l'axe central A72 est représenté uniquement à la figure 7. On note r72 le rayon de courbure des surfaces 72.

La surface 104 définit un tronçon de cylindre dont l'axe central est confondu avec l'axe X-X'. On note r104 le rayon de courbure de la surface 104.

Le rayon de courbure r72 des surfaces 72 est égal au rayon de courbure r104 de la surface 104 en tronçon de cylindre. Dans ce cas, la course supplémentaire du volet 6 s'étend jusqu'à une position dans laquelle les surfaces 72 peuvent venir en contact surfacique avec la surface supérieure 104, grâce à la correspondance des rayons de courbure r72 et r104.

Selon un mode de réalisation non représenté, les surfaces 72 peuvent être planes.

La surface arrière 68 est curviligne et a un centre de courbure situé sur l'axe de rotation A6. La surface arrière 68 est représentée comme étant une surface en tronçon de sphère. En variante, la surface arrière 68 peut être une surface cylindrique à section circulaire centrée sur l'axe A6.

Selon un mode de réalisation non représenté de l'invention, le dispositif de régulation D peut ne pas comprendre de chambre C dans laquelle la pression d'air contrôle la position du volet 6, mais un soufflet gonflable ou une membrane qui actionne le volet 6 selon une technique connue de DE-U-20 2004 003 811, ou bien un système tel que décrit dans le brevet FR-B-2 707 740.

Dans un tel cas de figure, les surfaces qui tronquent l'extrémité du volet 6 se présentent sous la forme de bords qui tronquent les coins du volet 6. Le dispositif de régulation D comprend une paroi d'étanchéité 12 qui s'étend entre l'élément de calibrage 8 et une surface interne 106 constituée par une surface inférieure du conduit interne 10. La paroi d'étanchéité 12 est adaptée pour empêcher le passage d'air du côté du conduit interne 10 opposé à la section S de passage de l'air. La paroi d'étanchéité 12 est mobile en rotation par rapport au conduit interne 10 sous l'action du déplacement de l'élément de calibrage 8. Un bord de la paroi d'étanchéité 12 comprend un élément cylindrique 122 s'étendant selon un axe A12 de rotation de la paroi d'étanchéité par rapport au conduit interne 10. La partie cylindrique 122 est montée dans un logement cylindrique 108 du conduit interne 10 de manière que la paroi 12 puisse pivoter autour de l'axe A12 qui est parallèle à l'axe A6.

La paroi d'étanchéité 12 est reliée à l'élément de calibrage 8 par deux pions parallèles, dont un est visible à la figure 4 avec la référence 84, ménagés sur l'élément de calibrage 8. Les pions 84 s'étendent selon l'axe X-X' au voisinage d'une zone centrale de l'élément de calibrage 8. Les pions 84 s'étendent à partir d'une paroi avant 86 de l'élément de calibrage 8 qui est parallèle à une face avant 110 du conduit interne 10. La paroi avant 86 comprend en outre une lumière 860, oblongue et parallèle à l'axe A8. Une vis représentée par son trait d'axe 130 est montée dans un trou 112 de la face avant 110 s'étendant parallèlement à l'axe X-X'. Cette vis assure le guidage en translation de l'élément de calibrage 8 selon l'axe A8 et la solidarisation de l'élément de calibrage 8 au conduit interne 10. Le guidage en translation de l'élément de calibrage 8 par rapport au conduit interne 10 est également assuré par deux nervures 114 du conduit 10 qui sont parallèles entre elles et à l'axe A8, adaptées pour coulisser dans des rainures correspondantes 862 de la paroi avant 86. Les pions 84 et les rainures 862 sont situés sur un côté de la paroi avant 86 qui est en regard de la face avant 110.

Les pions 84 sont insérés dans deux cavités 124 de la paroi d'étanchéité 12. Lorsque l'élément de calibrage 8 est déplacé vers sa seconde position selon la flèche F2 à la figure 2, la paroi d'étanchéité 12 est entrainée en rotation selon la flèche R3 à la figure 4 par les doigts 84 qui coopèrent avec les cavités 124. Lorsque l'élément de calibrage 8 est déplacé de sa première position vers sa deuxième position, l'air passe sur les côtés de la face avant 86 mais ne passe pas à travers le dispositif D grâce à la paroi d'étanchéité 12.

Selon un autre mode de réalisation non représenté, la paroi d'étanchéité 12 peut être équipée d'un ressort qui la maintient en contact avec l'élément de calibrage 8 dans le sens de rotation R3.

La structure de la paroi d'étanchéité 12 permet d'assurer l'étanchéité du dispositif de régulation D sans avoir recours à une face avant couvrant toute la section du conduit interne 10, comme c'est le cas dans FR-B-2 728 660. La face avant 86 de l'élément de calibrage 8 ne dépasse pas du dispositif D, c'est-à-dire de la circonférence du manchon 2, lorsque l'élément de calibrage 8 est dans sa première position.

Dans la première position de l'élément de calibrage 8, la paroi d'étanchéité 12 repose contre la surface inférieure 106 parallèlement à l'axe X-X'. Cela est possible grâce à deux évidements 116 ménagés dans le conduit interne 10 de manière à recevoir les pions 84 et des tubes 126 définissant les cavités 124, qui font saillie par rapport à la paroi d'étanchéité 12. Ainsi, lorsque l'élément de calibrage 8 est dans sa première position, ni la paroi d'étanchéité 12 ni ses connexions avec l'élément de calibrage 8 n'entravent la course en translation de l'élément de calibrage 8.

Selon un mode de réalisation non représenté de l'invention, le dispositif D ne comprend pas de manchon 2 ni de conduit interne 10, mais un seul conduit dans lequel l'élément de calibrage 8 est monté.

Selon un autre mode de réalisation non représenté de l'invention, la paroi d'étanchéité 12 peut être reliée à l'élément de calibrage 8 par un seul pion 84 inséré dans une seule cavité 124 de la paroi d'étanchéité.

Selon un autre mode de réalisation non représenté, le volet 6 du dispositif de régulation D peut ne pas comprendre de surfaces 72 qui tronquent l'extrémité 641.

Les caractéristiques des modes de réalisation et variantes décrits ci-dessus peuvent être combinées dans le cadre de la présente invention.

## Revendications

1. Dispositif de régulation (D) du débit d'air dans une canalisation, comprenant :
- un conduit (10) adapté pour s'encastrer dans la canalisation,
- un volet (6) mobile en fonction du débit d'air (F1) entrant dans le conduit (10), le volet (6) délimitant, par rapport à une surface interne (104) du conduit (10), une section (S) de passage d'air,
- un élément de calibrage (8) réglable monté mobile en translation selon un axe transversal (A8) perpendiculaire à un axe de rotation (A6) du volet (6), entre une première position, dans laquelle le débit d'air pouvant passer dans le dispositif (D) est maximal, et une seconde position, dans laquelle le débit d'air pouvant passer dans le dispositif (D) est minimal,
**caractérisé en ce que** le dispositif (D) comprend une paroi d'étanchéité (12), s'étendant entre l'élément de calibrage (8) et une surface interne (106) du conduit (10), adaptée pour empêcher le passage d'air du côté du conduit (10) opposé à la section (S) de passage de l'air, cette paroi d'étanchéité (12) étant mobile en rotation par rapport au conduit (10) sous l'action du déplacement de l'élément de calibrage (8), et **en ce que** l'élément de calibrage (8) comprend une paroi avant (86) perpendiculaire à l'axe longitudinal (X-X') du conduit (10) qui, dans la première position de l'élément de calibrage (8), ne dépasse pas de la circonférence d'une face avant (110) du conduit (10).

2. Dispositif de régulation selon la revendication 1, **caractérisé en ce que** la paroi d'étanchéité (12) est mobile en rotation par rapport au conduit (10) autour d'un axe de rotation (A12) parallèle à l'axe de rotation (A6) du volet (6).

3. Dispositif de régulation selon la revendication 2, **caractérisé en ce que** la paroi d'étanchéité (12) est reliée à l'élément de calibrage (8) par au moins un pion (84) ménagé sur l'élément de calibrage (8) et inséré dans une cavité (124) de la paroi d'étanchéité (12).

4. Dispositif de régulation selon la revendication 3, **caractérisé en ce que** dans la première position de l'élément de calibrage (8), la paroi d'étanchéité (12) repose contre une paroi plane (106) du dispositif de régulation (D) dans une position parallèle à l'axe longitudinal (X-X') du conduit, et **en ce que** la paroi plane (106) comprend au moins un évidement (116) de réception du pion (84) de l'élément de calibrage (8) et d'une partie (126) de la paroi d'étanchéité (12) définissant la cavité (124).

5. Dispositif de régulation selon l'une des revendications 3 et 4, **caractérisé en ce que** l'élément de calibrage (8) comprend deux pions (84) parallèles insérés dans deux cavités (124) parallèles de la paroi d'étanchéité (12).

6. Dispositif de régulation selon l'une des revendications précédentes, **caractérisé en ce que** le volet (6) comprend, sur une extrémité (641) d'une surface plane (64) du volet (6), deux surfaces (72) qui tronquent l'extrémité (641) de la face plane (64) du volet (6) et dont la forme correspond à la forme d'une surface interne (104) du conduit (10).

7. Dispositif de régulation selon la revendication 6, **caractérisé en ce que** les surfaces (72) qui tronquent l'extrémité (641) du volet (6) sont en tronçon de cylindre à section circulaire.

8. Dispositif de régulation selon la revendication 7, **caractérisé en ce que** le rayon de courbure (r72) des surfaces (72) en tronçon de cylindre est égal au rayon de courbure (r104) d'une surface interne (104) en tronçon de cylindre du conduit (10).

9. Dispositif de régulation selon l'une des revendications 7 et 8, **caractérisé en ce que** le volet (6) comprend deux parois latérales (66) planes parallèles entre elles et perpendiculaires à l'axe de rotation (A6) du volet (6), et une surface arrière (68) s'étendant à partir de l'extrémité (641) de la surface plane (64) à l'opposé d'un bord avant (70) du volet (6) par rapport à l'axe de rotation (A6) du volet (6), et **en ce que** les surfaces (72) en tronçon de cylindre sont ménagées aux intersections entre la surface plane (64), la surface arrière (68) et les parois latérales (66).

10. Dispositif de régulation selon la revendication 9, **caractérisé en ce que** dans la seconde position de l'élément de calibrage (8), la course du volet (6) s'étend jusqu'à une position limite dans laquelle l'aire de la section (S) de passage d'air est minimale, et dans laquelle la surface (72) en tronçon de cylindre du volet (6) peut venir en contact surfacique avec la surface interne (104) en tronçon de cylindre du conduit (10).

## Patentansprüche

1. Vorrichtung (D) zur Regelung des Luftdurchflusses in einer Leitung, umfassend:
- einen Kanal (10), der geeignet ist, in die Leitung eingelassen zu werden,
- eine abhängig vom in den Kanal einströmenden Luftdurchfluss (F1) bewegliche Klappe (6), wobei die Klappe (6) in Bezug auf eine Innenfläche (104) des Kanals (10) einen Luftdurchgangsquerschnitt (S) begrenzt,
- ein einstellbares Kalibrierelement (8), das gemäß einer Querachse (8) senkrecht zur Drehachse (A6) der Klappe (6) translatorisch beweglich zwischen einer ersten Position, in der der Luftdurchfluss, der in die Vorrichtung (D) strömen kann, maximal ist, und einer zweiten Position, in der der in die Vorrichtung (D) strömende Luftdurchfluss minimal ist, montiert ist,
**dadurch gekennzeichnet, dass** die Vorrichtung (D) eine Dichtungswand (12) umfasst, die sich zwischen dem Kalibrierelement (8) und einer Innenfläche (106) des Kanals (10) erstreckt und ausgebildet ist, den Luftdurchgang von der Seite des Kanals (10) entgegengesetzt zu dem Luftdurchgangsquerschnitt (S) zu verhindern, wobei diese Dichtungswand (12) in Bezug auf den Kanal (10) unter der Wirkung der Verschiebung des Kalibrierelements (8) hinsichtlich der Drehung beweglich ist, und dass das Kalibrierelement (8) eine Vorderwand (86) senkrecht zur Längsachse (X-X') des Kanals (10) umfasst, die in der ersten Position des Kalibrierelements (8) den Umfang einer Vorderstirnfläche (110) des Kanals (10) nicht überschreitet.

2. Regelvorrichtung nach Anspruch 1, **dadurch gekennzeichnet, dass** die Dichtungswand (12) in Bezug auf den Kanal (10) um eine Drehachse (A12) parallel zur Drehachse (A6) der Klappe (6) drehbeweglich ist.

3. Regelvorrichtung nach Anspruch 2, **dadurch gekennzeichnet, dass** die Dichtungswand (12) mit dem Kalibrierelement (8) durch mindestens einen Ansatz (84) verbunden ist, der an dem Kalibrierelement (8) angeordnet ist und in einen Hohlraum (124) der Dichtungswand (12) eingefügt ist.

4. Regelvorrichtung nach Anspruch 3, **dadurch gekennzeichnet, dass** in der ersten Position des Kalibrierelements (8) die Dichtungswand (12) an einer ebenen Wand (106) der Regelvorrichtung (D) in einer Position parallel zur Längsachse (X-X') des Kanals ruht und dass die ebene Wand (106) mindestens eine Ausnehmung (116) zur Aufnahme des Ansatzes (84) des Kalibrierelements (8) und eines Teils (126) der Dichtungswand (12), der den Hohlraum (124) begrenzt, umfasst.

5. Regelvorrichtung nach einem der Ansprüche 3 und 4, **dadurch gekennzeichnet, dass** das Kalibrierelement (8) zwei parallel Ansätze (84) umfasst, die in zwei Hohlräumen (124) parallel zur Dichtungswand (12) eingefügt sind.

6. Regelvorrichtung nach einem der vorhergehenden Ansprüche, **dadurch gekennzeichnet, dass** die Klappe (6) an einem Ende (641) einer ebenen Fläche (64) der Klappe (6) zwei Flächen (72) umfasst, die das Ende (641) der ebenen Fläche (64) der Klappe (6) beschneiden und deren Form der Form einer Innenfläche (104) des Kanals (10) entspricht.

7. Regelvorrichtung nach Anspruch 6, **dadurch gekennzeichnet, dass** die Flächen (72), die das Ende (641) der Klappe (6) beschneiden, zylinderabschnittsförmig mit kreisförmigem Querschnitt sind.

8. Regelvorrichtung nach Anspruch 7, **dadurch gekennzeichnet, dass** der Krümmungsradius (r72) der zylinderabschnittsförmigen Flächen (72) gleich dem Krümmungsradius (r104) einer Innenfläche (104) in Zylinderabschnittsform des Kanals (10) sind.

9. Regelvorrichtung nach einem der Ansprüche 7 und 8, **dadurch gekennzeichnet, dass** die Klappe (6) zwei ebene Seitenwände (66), die zueinander parallel und senkrecht zur Drehachse (A6) der Klappe (6) sind, und eine Rückfläche (68) umfasst, die sich von dem Ende (641) der ebenen Fläche (64) entgegengesetzt zum Vorderrand (70) der Klappe (6) in Bezug auf die Drehachse (A6) der Klappe (6) erstreckt, und dass die Flächen (72) in Zylinderabschnittsform an den Übergängen zwischen der ebenen Fläche (64), der Rückfläche (68) und der Seitenflächen (66) angeordnet sind.

10. Regelvorrichtung nach Anspruch 9, **dadurch gekennzeichnet, dass** in der zweiten Position des Kalibrierelements (8) der Weg der Klappe (6) sich bis zu einer Grenzposition erstreckt, in der der Flächeninhalt des Luftdurchgangsquerschnitts (S) minimal ist und in der die Zylinderabschnittsfläche (72) der Klappe (6) in Flächenkontakt mit der Innenfläche (104) in Zylinderabschnittsform des Kanals (10) kommen kann.

## Claims

1. A device (D) for regulating the air flow in a pipe, comprising:
- a duct (10) suitable for being embedded in the pipe,
- a flap (6) movable as a function of the air flow (F1) entering the duct (10), the flap (6) delimiting, relative to an inner surface (104) of the duct (10), an air passage section (S),
- an adjustable calibrating element (8) mounted translatable along a transverse axis (A8) perpendicular to an axis of rotation (A6) of the flap (6), between a first position, in which the air flow that can pass in the device (D) is maximal, and a second position, in which the air flow that can pass in the device (D) is minimal,
**characterized in that** the device (D) comprises a sealing wall (12), extending between the calibrating element (8) and an inner surface (106) of the duct (10), suitable for preventing the passage of air on the side of the duct (10) opposite the air passage section (S), that sealing wall (12) being rotatable relative to the pipe (10) under the action of the movement of the calibrating element (8), and **in that** the calibrating element (8) comprises a front wall (86) perpendicular to the longitudinal axis (X-X') of the duct (10) which, in the first position of the calibrating element (8), does not protrude past the circumference of a front face (110) of the duct (10).

2. The regulating device according to claim 1, **characterized in that** the sealing wall (12) is rotatable relative to the duct (10) around an axis of rotation (A12) parallel to the axis of rotation (A6) of the flap (6).

3. The regulating device according to claim 2, **characterized in that** the sealing wall (12) is connected to the calibrating element (8) by at least one slug (84) formed on the calibrating element (8) and inserted into a cavity (124) of the sealing wall (12).

4. The regulating device according to claim 3, **characterized in that** in the first position of the calibrating element (8), the sealing wall (12) rests against a planar wall (106) of the regulating device (D) in a position parallel to the longitudinal axis (X-X') of the duct, and **in that** the planar wall (106) comprises at least one recess (116) for receiving the slug (84) of the calibrating element (8) and part (126) of the sealing wall (12) defining the cavity (124).

5. The regulating device according one of claims 3 and 4, **characterized in that** the calibrating element (8) comprises two parallel slugs (84) inserted in two parallel cavities (124) of the sealing wall (12).

6. The regulating device according to one of the preceding claims, **characterized in that** the flap (6) comprises, on one end (641) of a planar surface (64) of the flap (6), two surfaces (72) that truncate the end (641) of the planar face (64) of the flap (6) and the shape of which corresponds to the shape of an inner surface (104) of the duct (10).

7. The regulating device according to claim 6, **characterized in that** the surfaces (72) that truncate the end (641) of the flap (6) are in the form of a cylinder segment with a circular section.

8. The regulating device according to claim 7, **characterized in that** the curve radius (r72) of the cylinder segment surfaces (72) is equal to the curve radius (r104) of a cylinder segment inner surface (104) of the duct (10).

9. The regulating device according to one of claims 7 to 8, **characterized in that** the flap (6) comprises two planar side walls (66) parallel to each other and perpendicular to the axis of rotation (A6) of the flap (6), and a rear surface (68) extending from the end (641) of the planar surface (64) opposite a front edge (70) of the flap (6) relative to the axis of rotation (A6) of the flap (6), and **in that** the cylinder segment surfaces (72) are arranged at the intersections between the planar surface (64), the rear surface (68) and the side walls (66).

10. The regulating device according to claim 9, **characterized in that** in the second position of the calibrating element (8), the travel of the flap (6) extends to a limit position in which the area of the air passage section (S) is minimal, and in which the cylinder segment surface (72) of the flap (6) can come into surface contact with the cylinder segment inner surface (104) of the duct (10).
